# FASCICULE DE BREVET EUROPEEN

(11) **EP 2 102 994 B1**
(45) Date de publication et mention de la délivrance du brevet: **11.11.2015**
(21) Numéro de dépôt: 07871821.0
(22) Date de dépôt: 10.12.2007
(51) Int. Cl.: H04B 5/00, G08C 17/02, H04B 3/46

(54) **DISPOSITIF DE COUPLAGE DE SIGNAL DE MESURE A ISOLATION ELECTRIQUE ET APPAREIL ELECTRIQUE COMPORTANT UN TEL DISPOSITIF**
ELEKTRISCH ISOLIERTE EINRICHTUNG ZUM KOPPELN VON MESSSIGNALEN UND EINE SOLCHE EINRICHTUNG UMFASSENDES ELEKTRISCHES GERÄT
ELECTRICALLY INSULATED DEVICE FOR COUPLING MEASURING SIGNALS, AND ELECTRICAL APPLIANCE COMPRISING SUCH A DEVICE

(30) Priorité: 18.12.2006 FR 0611006
(43) Date de publication de la demande: 23.09.2009
(73) Titulaire: Schneider Electric Industries SAS, 92500 Rueil-Malmaison (FR)
(72) Inventeur: CADOUX, Yvan, F-38960 Saint Aupre (FR); LEONARD, Didier, F-38170 Seyssinet (FR); REYMOND, Bruno, F-38430 Moirans (FR)
(74) Mandataire: Tripodi, Paul
(86) Numéro de dépôt international: PCT/FR2007/002026
(87) Numéro de publication internationale: WO 2008/087276

(56) Documents cités:
- EP-A- 1 300 965
- FR-A- 2 690 752
- US-A1- 2003 076 086
- US-B1- 6 885 184

## Description

### DOMAINE TECHNIQUE

L'invention concerne un dispositif de couplage à isolement électrique comportant :
- au moins une entrée de signal d'entrée,
- une sortie de signal de sortie représentatif dudit signal d'entrée, et
- des moyens de transfert de signal à isolement électrique recevant le signal d'entrée et fournissant ledit signal de sortie,
   - au moins un transformateur (14) de signal ayant au moins un enroulement primaire pour recevoir un signal primaire représentatif dudit signal d'entrée,
   - des moyens de commutation pour découper le signal d'entrée et fournir ledit signal primaire représentatif dudit signal d'entrée audit enroulement primaire,
   - des moyens de commande des moyens de commutation comportant une entrée de signal de commande recevant des signaux de commande pendant des périodes de commutation, et une sortie électriquement isolée de l'entrée de signaux de commande et connectée audits moyens de commutation pour commander le découplage de signal primaire pendant lesdites des périodes de commutation.

L'invention concerne aussi un appareil électrique comportant un tel dispositif de couplage.

### ETAT DE LA TECHNIQUE

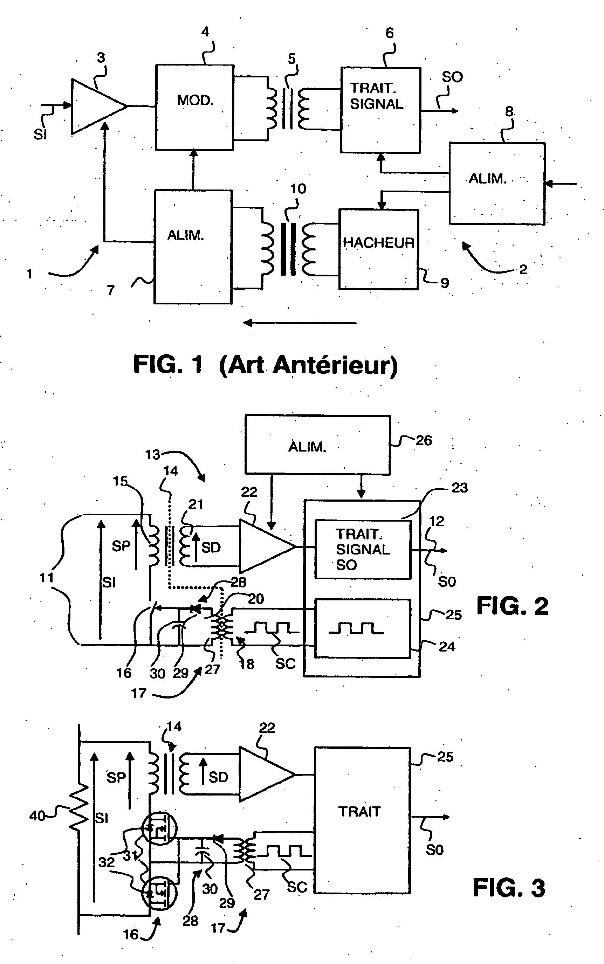

Les dispositifs de couplage de signal de mesure à isolation électrique connus sont généralement réalisés avec une première partie 1 de traitement de signal d'entrée SI et une seconde partie 2 de traitement de signal de sortie SO. Un schéma d'un dispositif connu est représenté sur la figure 1. Une première partie 1 de signal d'entrée comporte généralement un amplificateur 3 de signal et un modulateur 4 pour transférer une valeur transformée ou une valeur numérique du signal d'entrée. Le modulateur 4 est connecté généralement à un transformateur 5 ou à d'autres coupleurs pour isoler la première partie 1 de la seconde partie 2 de traitement de signal. Dans la seconde partie 2, le signal est traité et reconditionné dans un circuit 6 pour être traité en tant que signal de sortie SO. Dans les dispositifs de l'art antérieur, la première partie 1 recevant le signal d'entrée nécessite un circuit alimentation électrique 7 pour faire fonctionner l'amplificateur et le modulateur. Dans le schéma de l'art antérieur, une première alimentation électrique principale 8 alimente le circuit de traitement 6 de signal de sortie et un circuit de conversion d'énergie électrique comportant un hacheur 9 et un transformateur d'alimentation 10 et le circuit 7 pour fournir de l'énergie électrique d'alimentation de toute la première partie 1.

Dans d'autres schémas il peut y avoir deux alimentations indépendantes pour alimenter séparément la première partie et la seconde partie.

Les dispositifs de couplage de signal de mesure à isolation électrique connus de l'état de la technique nécessitant des circuits auxiliaires d'alimentation peuvent difficilement être intégrés dans des circuits ou des appareils de mesure de traitement de très faible encombrement. De plus, de tels dispositifs ont aussi l'inconvénient de consommer de l'énergie électrique les rendant incompatibles avec des applications à très faible consommation.

Certains dispositifs comportent des transformateurs recevant un signal de mesure de courant découpé tel que représenté dans les documents GB1585889 ET US2003/0076086. Cependant, dans le document US2003/0076086 les moyens de commande des interrupteurs de signal sont des composants opto-électroniques qui sont incompatibles avec des applications industrielles ayant de fortes contraintes thermiques. En particulier, ces composants ont des caractéristiques de rendement et de vitesse qui diminuent très fortement lorsque la température augmente. Ces fortes températures de fonctionnement sont particulièrement présentes dans des appareils électriques tels que des déclencheurs électroniques et les disjoncteurs électriques.

Un autre exemple est fourni dans le document EP 1 300 965.

### EXPOSE DE L'INVENTION

L'invention a pour but un dispositif de couplage de signal de mesure à isolation électrique ne nécessitant pas d'alimentation de la partie traitant le signal d'entrée et pouvant fonctionner normalement avec des écarts de température très importants, et un appareil comportant un tel dispositif.

Dans un dispositif de couplage à isolement électrique selon l'invention, lesdits moyens de commande des moyens de commutation comportent des moyens de couplage par induction électromagnétique et/ou par liaison capacitive.

Ledit transformateur de signal comporte un enroulement de sortie connecté à des moyens de détection recevant un signal secondaire de sortie découpé et fournissant un signal de sortie représentatif du signal d'entrée.

Dans une première variante, le découpage du signal d'entrée est unidirectionnel. Dans une seconde variante, le découpage du signal d'entrée est bidirectionnel ou avec inversion.

Dans un premier mode de réalisation particulier, le transformateur de signal comporte deux enroulements primaires connectés avec des sens d'enroulement inversés, une première extrémité de chaque enroulement est reliée en un point commun des enroulements pour recevoir l'entrée de signal, des secondes extrémités des enroulements sont connectés à des premiers moyens de commutation et à des seconds moyens de commutation pour découper et orienter le signal d'entrée alternativement sur le premier et le second enroulement.

De préférence, les moyens de commutation commutent des signaux d'entrée sur les enroulements primaires avec un recouvrement dès commandes en début et en fin de commutation.

Dans un second mode de réalisation particulier, le transformateur de signal comporte un enroulement primaire connecté à des moyens de commutation comportant quatre commutateurs électroniques connectés en pont à deux branches, des lignes extérieures du pont recevant le signal d'entrée et des branches intérieures du pont étant connectées audit enroulement primaire dudit transformateur de signal, lesdits commutateurs en pont étant commandés alternativement de manière croisée pour inverser le sens du signal primaire appliqué à l'enroulement primaire dudit transformateur de signal.

Dans un troisième mode de réalisation particulier, le signal d'entrée est appliqué à un pont de deux résistances de mesure connectées en série, un point commun des résistances de mesure étant connecté à une première extrémité d'un enroulement primaire du transformateur de signal, une seconde extrémité dudit enroulement primaire du transformateur de signal étant connecté à une partie centrale commune d'un pont de commutation à deux commutateurs des moyens de commutation, des lignes externes des commutateurs dudit pont étant connectées sur les parties externes opposées au point commun du pont de résistances, les deux commutateurs fonctionnant de manière alternée pour inverser le sens du signal primaire appliqué à l'enroulement primaire dudit transformateur de signal.

De préférence, les moyens de détection comportent des moyens de filtrage du signal de sortie découpé.

Dans un mode de réalisation préférentiel, les moyens de détection comportent des moyens de détection synchrones synchronisés avec la commande des moyens de commutation pour reconstituer un signal de sortie représentatif dudit signal d'entrée.

Avantageusement, le transformateur de signal comporte :
- au moins un premier enroulement primaire pour recevoir un premier signal d'entrée et au moins des premiers moyens de commutation pour découper ledit premier signal d'entrée
- au moins un second enroulement primaire pour recevoir un second signal d'entrée et au moins des seconds moyens de commutation pour découper ledit second signal d'entrée, et
- au moins un enroulement secondaire pour fournir un signal représentatif dudit premier signal d'entrée ou dudit second signal d'entrée.

Avantageusement, le dispositif comporte des moyens de traitement :
- pour sélectionner des premiers moyens de commande desdits premiers moyens de commutation pour fournir un signal de sortie représentatif dudit premier signal d'entrée, ou
- pour sélectionner des seconds moyens de commande desdits seconds moyens de commutation pour fournir un signal de sortie représentatif dudit second signal d'entrée.

De préférence, les moyens de traitement commandent séquentiellement la sélection des moyens de commande pour fournir un signal de sortie multiplexé représentatif séquentiellement de chaque signal d'entrée.

Avantageusement, les moyens de traitement commandent simultanément des moyens de commande pour fournir un signal de sortie représentatif de la somme des signaux d'entrée.

De préférence, les moyens de traitement comportent des moyens d'échantillonnage de signal pour échantillonner un signal de sortie représentatif d'un signal secondaire multiplexé et fournir des valeurs représentatives de chaque signal d'entrée, l'échantillonnage étant synchroniser avec la sélection des moyens de commande.

De préférence, l'échantillonnage est effectué après un délai prédéterminé suivant le début d'une impulsion de commande fermant des moyens de commutation.

De préférence, les moyens de traitement activent la commande des moyens de commande pendant des périodes de durée courte et arrêtent la commande des moyens de commande pendant des périodes de durée longue.

Dans un mode de réalisation préféré, lesdits moyens de commande des moyens de commutation comportent au moins un transformateur de commande ayant un enroulement primaire recevant les signaux de commande et un enroulement secondaire pour commander des moyens de commutation.

De préférence, au moins un transformateur de commande des moyens de commande est un transformateur à air ayant un enroulement primaire sur une première face d'un support de circuit et un enroulement secondaire sur une seconde face dudit support de circuit.

De préférence, le support de circuit est composé d'un matériau polyimide. Avantageusement, le support de circuit a une épaisseur comprise entre 3 et 80 µm.

Dans un autre mode de réalisation, le transformateur de mesure est un transformateur à air ayant au moins un enroulement primaire sur une première face d'un support de circuit et un enroulement secondaire sur une seconde face dudit support de circuit.

Avantageusement, le support de circuit est composé d'un matériau polyimide et a une épaisseur comprise entre 3 et 80 µm.

Dans un autres mode de réalisation, ledit au moins un transformateur de commande et au moins un transformateur de mesure sont placés sur un même support isolant avec des enroulements de chaque coté dudit support de circuit.

Avantageusement, le support de circuit est composé d'un matériau polyimide et a une épaisseur comprise entre 3 et 80 µm.

Dans un autre mode de réalisation, lesdits moyens de commande des moyens de commutation comportent au moins deux condensateurs de couplage capacitif ayant chacun une première électrode pour recevoir les signaux de commande et une seconde électrode pour commander des moyens de commutation.

Avantageusement, un support de circuit composé d'un matériau polyimide et ayant une épaisseur comprise entre 3 et 80 µm, ledit support de circuit a sur une première face les premières électrodes desdits deux condensateurs de couplage et sur la seconde face les secondes électrodes desdits deux condensateurs de couplage.

Dans un autres mode de réalisation, le dispositif de mesure comporte des moyens de commande des moyens de commutation et les moyens de commutation groupés en un micro composant électromagnétique de type Mem's.

Avantageusement, le dispositif comporte un shunt électrique connecté aux entrées de signal pour la mesure d'un courant électrique, le signal de sortie étant représentatif d'un courant électrique circulant dans ledit shunt.

Un appareil électrique selon l'invention comportant :
- au moins une résistance de mesure,
- des contacts électriques de puissance connectés en série avec ladite au moins une résistance de mesure,
- un mécanisme de commande d'ouverture desdits contacts électriques, et
- des moyens de traitement de fonctions de protection commandant un relais relié audit mécanisme,
comporte au moins un dispositif de couplage tel que défini ci-dessus ayant :
- au moins une entrée de signal connectée à ladite au moins une résistance de mesure, et
- une sortie de signal connectée aux moyens de traitement de fonction de protection pour fournir un signal représentatif d'un courant circulant dans ladite au moins une résistance de mesure.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif de couplage de signaux électrique à isolement électrique de l'état de la technique ;
- la figure 2 représente un schéma d'un dispositif de couplage de signaux électriques selon un premier mode de réalisation de l'invention ;
- la figure 3 représente un schéma d'un dispositif selon la figure 2 avec une commande à découpage par transistors;
- la figure 4 représente un premier schéma d'un dispositif dé couplage selon un mode de réalisation de l'invention de type découpage avec inversion ;
- les figures 5A à 5G représentent des chronogrammes de signaux dans un dispositif selon le mode de réalisation de la figure 4 ;
- les figures 6 et 7 représentent des variantes de dispositifs de couplage selon des modes de réalisation de l'invention de type découpage avec inversion ;
- les figures 8A à 8C représentent des courbes de signaux dans des dispositifs de couplage selon des modes de réalisation de l'invention à découpage bidirectionnel ;
- la figure 9 représente un mode de réalisation d'un dispositif de couplage de signaux électriques selon un mode de réalisation de l'invention du schéma de la figure 7 ;
- la figure 10 représente un premier schéma d'un dispositif de couplage selon un mode de réalisation de l'invention avec un multiplexage de signaux d'entrée sur un transformateur de signal commun ;
- la figure 11 représente un second schéma d'un dispositif de couplage selon un mode de réalisation de l'invention avec un multiplexage de signaux d'entrée sur un transformateur de signal commun ;
- les figures 12A à 12G représentent des courbes de signaux dans un dispositif de la figure 11;
- la figure 13 représente un organigramme montrant un cycle d'acquisition d'échantillon de mesure ;
- la figure 14 représente un schéma d'un appareil électrique comportant un dispositif de mesure selon un mode réalisation l'invention ;
- la figure 15 représente un transformateur d'impulsion sous forme imprimée utilisé dans les moyens de commande d'un dispositif de couplage selon un mode réalisation de l'invention ;
- la figure 16 représente un groupement de transformateurs d'impulsion et de transformateur de mesure sous forme imprimée utilisé dans un dispositif de couplage selon un mode de réalisation de l'invention ;
- les figures 17 et 18 montrent des variantes de dispositifs selon des modes de réalisation.

### DESCRIPTION DETAILLEE DE MODES DE REALISATION PREFERES

La figure 2 représente un schéma d'un dispositif de couplage de signaux électriques selon un premier mode de réalisation de l'invention. Le dispositif de couplage à isolement électrique comporte au moins une entrée 11 de signal d'entrée SI, une sortie 12 de signal de sortie SO représentatif dudit signal d'entrée, et des moyens de transfert 13 de signal à isolement électrique recevant le signal d'entrée et fournissant ledit signal de sortie. Les moyens de transfert comportent au moins un transformateur 14 de signal ayant au moins un enroulement primaire 15 pour recevoir un signal primaire SP représentatif dudit signal d'entrée SI. Le signal d'entrée est découpé par des moyens de commutation 16 représentés par un interrupteur commandé pour fournir ledit signal primaire SP représentatif dudit signal d'entrée SI audit enroulement primaire 15. Les moyens de commutation 16 sont commandés par des moyens de commande 17 comportant une entrée 18 de signaux commande recevant des signaux commande SC. Une sortie 20 des moyens de commandes est électriquement isolée de l'entrée 18 de signaux de commande et est connectée audits moyens de commutation 16 pour commander le découpage de signal primaire à une fréquence de commutation.

Sur la figure 2 le signal SI est découpé par l'interrupteur électronique 16 à une fréquence de découpage élevée pour fournir sur l'enroulement primaire 15 du transformateur de signal 14 un signal découpé SP. Ledit transformateur 14 de signal comporte un enroulement 21 de sortie connecté à des moyens 23 de détection recevant un signal secondaire de sortie SD découpé et fournissant un signal de sortie SO représentatif du signal d'entrée SI. Le signal secondaire SD induit dans un enroulement secondaire 21 du transformateur de signal est ensuite traiter pour fournir le.signal de sortie SO. Le traitement peut comprendre une amplification dans un amplificateur 22 suivi d'une détection et d'un filtrage dans un module de traitement 23 de signal de sortie. La détection peut se faire par redressement simple, par détection d'enveloppe ou par redressement synchrone.

Le signal de commande SC des moyens de commutation est fournit de préférence par un générateur 24 de signaux de découpage situé dans la seconde partie 2 de traitement de signal. De préférence, le module 23 de traitement et le générateur de signaux 24 de commande sont disposés dans une même unité de traitement 25 et alimentés par un même circuit d'alimentation 26. Ce circuit d'alimentation 26 peut alimenter aussi l'amplificateur 22. Les signaux de commande sont appliqués à un transformateur 27 d'impulsion des moyens de commande isolés. La sortie des moyens de commande peut comporter un circuit de conditionnement 28 de signaux comportant par exemple une diode 29 et un condensateur 30 pour être adapter aux moyens de commutation 16.

Sur la figure 3 montre un schéma d'un dispositif selon un mode de réalisation de l'invention avec une commande de découpage à transistors 31 à effet de champ ayant des diodes 32 internes associées en inverse. Ces transistors sont connectés en série en sens inverse, c'est à dire que leurs sources sont connectées ensemble et servent de référence aux signaux de commande fournis par le transformateur d'impulsion 27, et leurs électrodes de commande sont connectées ensemble pour recevoir lesdits signaux de commande du transformateur 27 à travers le conditionneur 28. Quel que soit le sens ou la polarité du signal d'entrée, les deux transistors conduisent. Si aucun signal de commande est fourni, les deux transistors sont bloqués et selon le sens ou la polarité du signal d'entrée seulement l'une des deux diodes bloque le signal d'entrée Avec un tel schéma, le dispositif fonctionne quelle que soit la polarité et le niveau du signal d'entrée qui peut être alternatif ou continu. Sur le schéma de la figure 3, une résistance 40 de mesure ou de charge est connectée en entrée du dispositif pour générer le signal d'entrée SI. Si la résistance 40 est un shunt électrique le signal SI est signal de mesure de courant.

Si le signal d'entrée a une très faible tension, inférieure par exemple à 0,6 volt, un seul transistor 31 à effet de champ peut suffire. Dans cette zone le transistor fonctionne de manière bidirectionnelle et la diode associée n'est pas passante en polarisation directe.

Le dispositif de couplage peu fonctionner en mode de découpage du signal d'entrée unidirectionnel en découpant sur des ordres de commande consécutifs le signal d'entrée dans la même polarité et en l'appliquant aussi avec la même polarité sur l'enroulement primaire du transformateur de signal.

Pour améliorer le fonctionnement du transformateur de signal 14, le découpage du signal d'entrée peut être avantageusement bidirectionnel. Dans ce cas, le signal d'entrée est découpé et inversé à chaque ordre de commande pour fournir sur un circuit d'induction primaire du transformateur de signal 14 un signal primaire ayant des sens d'inductions consécutifs inversés. Ainsi, un circuit magnétique de couplage du transformateur de signal est magnétisé dans un sens puis démagnétisé et remagnétisé dans un autre sens selon les ordres de commande pour contrôler la rémanence dudit circuit magnétique et améliorer l'efficacité du transfert de signal entre le primaire et le secondaire du transformateur 14.

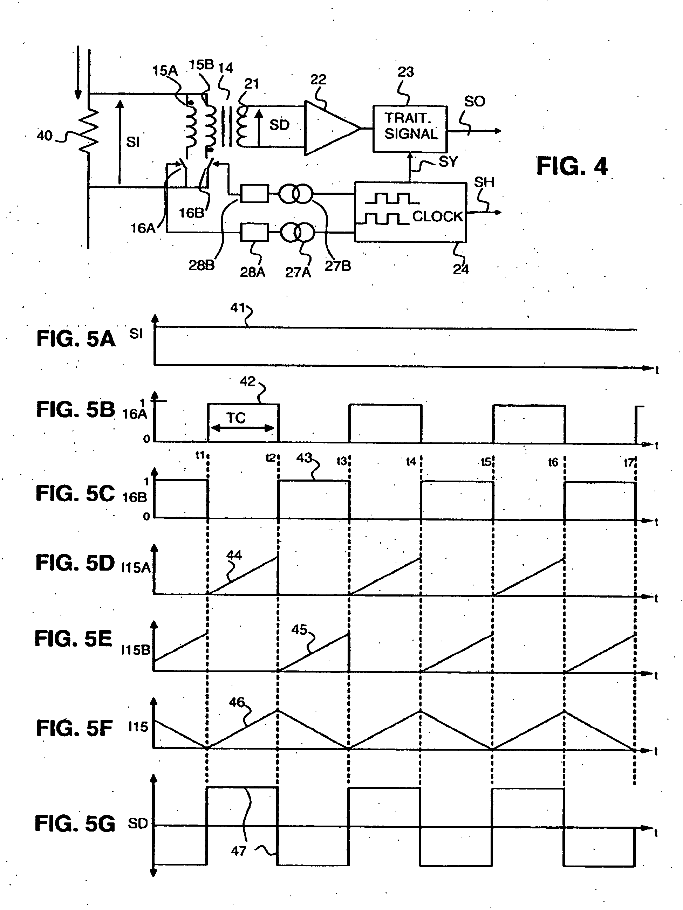

La figure 4 représente un premier schéma d'un dispositif de couplage selon un mode de réalisation de l'invention à découpage bidirectionnel. Dans ce cas, le transformateur de signal 14 comporte deux enroulements primaires 15A et 15B connectés avec des sens d'enroulement inversés, une première extrémité de chaque enroulement est reliée en un point commun des enroulements pour recevoir l'entrée de signal d'entrée, des secondes extrémités des enroulements sont connectés à des premiers moyens 16A de commutation et à des seconds moyens 16B de commutation pour découper et orienter le signal d'entrée SI alternativement sur le premier et le second enroulement. De préférence pour améliorer le fonctionnement du circuit magnétique du transformateur 14, les moyens de commutation commutent les signaux sur les enroulements primaires avec un recouvrement des commandes en début et en fin de commutation. Le générateur de signaux 24 fournit les signaux de commande des moyens de commutation 16A et 16B représentés par des interrupteurs commandés. Le générateur 24 fournit aussi un premier signal de synchronisation SY au module de traitement 23 pour effectuer une détection synchrone du signal de sortie. En effet selon le sens du signal sur le primaire le signal de sortie peut être positif ou négatif. Une détection synchrone permet de retrouver une polarité de signal représentative de la polarité du signal d'entrée. Le générateur 24 peut aussi fournir ou recevoir un second signal de synchronisation pour fonctionner avec un échantillonneur de signal. Le générateur, le détecteur synchrone, et l'échantillonneur peuvent faire partie d'un même circuit.

Les figures 5A à 5G représentent des chronogrammes de signaux dans un dispositif de couplage selon le mode de réalisation de la figure 4. Sur la figure 5A, une courbe 41 montre un signal d'entrée SI. Dans cette figure, le signal d'entrée SI est continu et de polarité positive. La figure 5B montre une courbe 42 représentative de la commande de l'interrupteur 16A des moyens de commutation. La figure 5C montre une courbe 43 représentative de la commande de l'interrupteur 16B des moyens de commutation. La figure 5D montre une courbe 44 représentative d'un courant I15A dans le premier enroulement primaire 15A du transformateur de signal 14. La figure 5E montre une courbe 45 représentative d'un courant I15B dans le second enroulement primaire 15B du transformateur de signal 14. La figure 5F montre une courbe 46 représentative d'une résultante de courant 115 correspondant aux courants I15A et I15B circulant dans les deux enroulements primaires 15A et 15B du transformateur de signal 14 commandés avec inversion de sens. La figure 5G montre une courbe 47 représentative d'un signal de sortie SD sur l'enroulement secondaire 21 du transformateur 14.

A un instant t1, l'interrupteur 16A est commandé en fermeture alors que l'interrupteur 16B. vient de s'ouvrir. L'enroulement 15A reçoit le signal d'entrée SI. Il génère un courant I15A et une induction magnétique croissante I15. Cette induction génère sur le secondaire du transformateur 21 un signal de sortie égale à la dérivée du flux, donc un signal positif SD. A un instant t2, l'interrupteur 16B est commandé en fermeture, alors que l'interrupteur 16A est commandé en ouverture. Un courant I15B circule dans l'enroulement 15B. Le courant I15A s'annule. L'induction magnétique résultante représentée par I15 décroît parce que l'enroulement 15B est bobiné en sens contraire de l'enroulement 15A. Le signal sur le secondaire du transformateur SD devient négatif. Les commutations alternatives des interrupteurs 16A et 16B induisent une induction magnétique sans discontinuité dans le transformateur 14 et génèrent ainsi un signal SD alternative à composante continue nulle.

Avec un tel dispositif, les courants d'induction dans le primaire ne sont jamais interrompus et les perturbations dues aux commutations dans les enroulements primaires ne sont pas induites dans le signal secondaire de sortie SD. Le signal de sortie SD peut être redressé pour fournir un signal de même signe que le signal primaire. Une période de découpage TC peut être définie, entre le début de la conduction et la fin de la conduction d'un interrupteur 16, par exemple entre les instant t1 et t2.

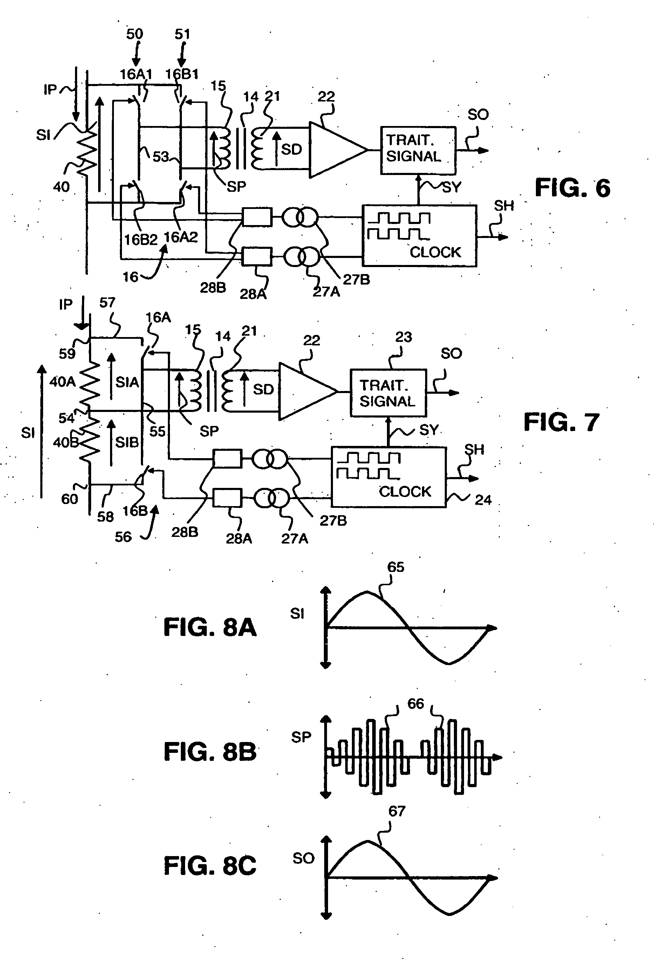

La figure 6 représente un second schéma d'un dispositif de couplage selon un mode de réalisation de l'invention à découpage bidirectionnel. Dans ce cas, le transformateur de signal 14 comporte un enroulement primaire 15 connecté à des moyens de commutation 16 comportant quatre commutateurs ou interrupteurs électroniques 16A1, 16A2 et 16B1, et 16B2 connectés en pont à deux branches 50 et 51.Dans ce schéma, des lignes extérieures du pont reçoivent le signal d'entrée SI et des parties intérieures 53 des branches du pont sont connectées audit enroulement primaire 15 du transformateur de signal 14. Lesdits commutateurs 16A1, 16A2 et 16B1, et 16B2 en pont sont commandés alternativement de manière croisée pour inverser le sens du signal primaire SP appliqué à l'enroulement primaire 15 dudit transformateur de signal 14. Les commutateurs 16A1 et 16A2 en montage croisé sont commandés en même temps pour appliquer le signal d'entrée dans un premier sens et les commutateurs 16B1 et 16B2 en montage croisé sont commandés en même temps pour appliquer le signal d'entrée dans un second sens. La résistance 40 peut être une résistance de mesure ou un shunt électrique pour la mesure de signaux de courant.

La figure 7 représente un troisième schéma d'un dispositif de couplage selon un mode de réalisation de l'invention à découpage bidirectionnel. Dans ce cas, le signal d'entrée SI est appliqué à un pont de deux résistances 40A et 40B de mesure connectées en série. Un point commun 54 des résistances de mesure est connecté à une première extrémité d'un enroulement primaire 15 du transformateur de signal 14, et une seconde extrémité dudit enroulement primaire du transformateur de signal est connecté à une partie centrale commune 55 d'un pont 56 de commutation à deux commutateurs 16A et 16B des moyens de commutation. Des lignes externes 57 et 58 des commutateurs dudit pont sont connectées sur les parties externes 59 et 60 opposées au point commun 54 du pont de résistances. Les deux commutateurs 16A et 16B fonctionnent de manière alternée pour inverser le sens du signal primaire SP appliqué à l'enroulement primaire 15 dudit transformateur de signal 14. Lorsque le commutateur 16A est fermé et le commutateur 16B est ouvert, une partie SIA du signal SI circulant dans la résistance 40A et ayant un premier signe, par exemple positif est appliqué sur l'enroulement 15. Puis, lors d'une commande de commutation suivante, le commutateur 16B est fermé et le commutateur 16A est ouvert. Dans ce cas, une partie SIB du signal SI présent sur la résistance de mesure 40B et ayant un second signe négatif opposé au premier signe est appliqué sur l'enroulement primaire 15 du transformateur. Le signal sur la résistance 40B est de polarité opposée au signal sur la résistance 40A puisque la référence de signal est sur le point commun 54.

Les figures 8A à 8C représentent des courbes de signaux dans des dispositifs de couplage selon des modes de réalisation de l'invention à découpage bidirectionnel. Sur la figure 8A, une courbe 65 montre un signal d'entrée SI alternatif de forme sinusoïdale. Sur la figure 8B, une courbe 66 montre un signal SD fourni sur un secondaire d'un transformateur de signal ayant une commande de signal primaire SP bidirectionnelle. Sur la figure 8C, une courbe 67 montre un signal de sortie SO traité de manière à reconstituer un signal sinusoïdal représentatif du signal d'entrée. Les moyens de traitement détectent le signal bidirectionnel en redressant le signal de manière synchronisée, par exemple avec des ponts de commutateurs électroniques ou des circuits électroniques à échantillonnage et traitement programmé. Ainsi, les moyens de détection comportent des moyens de filtrage du signal de sortie découpé et/ou des moyens de détection synchrones synchronisés avec la commande des moyens de commutation pour reconstituer un signal de sortie représentatif dudit signal d'entrée.

Pour limiter la consommation électrique du dispositif, les moyens de traitement 25 peuvent activer la commande des moyens de commande pendant des périodes de durée courte et arrêter la commande des moyens de commande pendant des périodes plus longues d'inactivité. Par exemple, dans le schéma de la figure 6, les commutateurs 16A1 et 16A2 en montage croisé sont commandés pendant une première période, Puis pendant une seconde période, les commutateurs 16B1 et 16B2 sont commandés pendant que les commutateurs 16A1 et16A2 sont arrêtés. Enfin, pour tous les commutateurs, la commande est arrêtée pendant une troisième période. De préférence, la première et la seconde périodes sont plus courtes que la troisième période. Les périodes peuvent être régulières dans un cycle ou dans un rapport cyclique prédéterminés ou commandées de manières aléatoire selon les besoins des moyens de traitement.

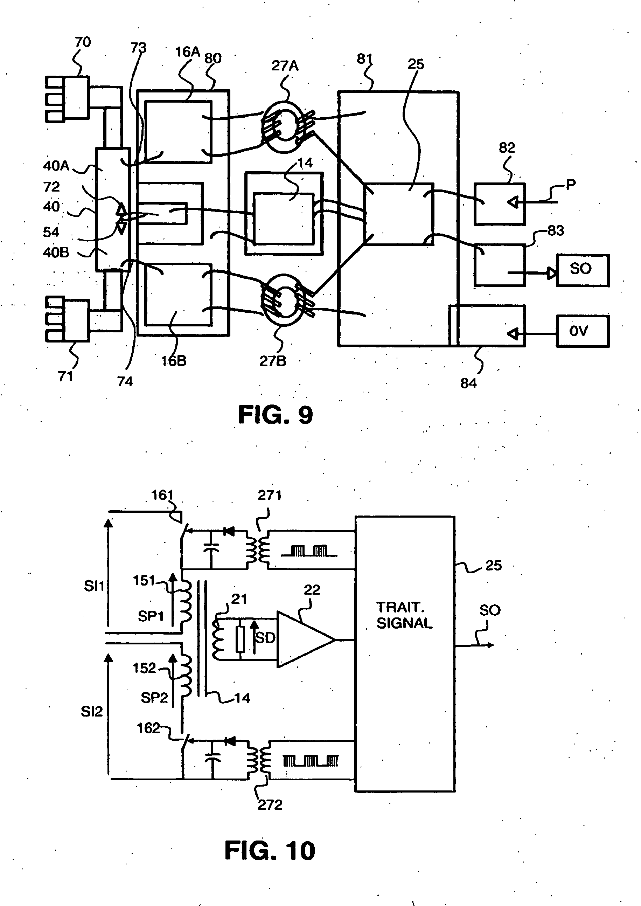

La figure 9 représente un mode de réalisation d'un dispositif de couplage de signaux électriques selon un mode de réalisation de l'invention du schéma de la figure 7. Dans ce mode de réalisation, la résistance de mesure 40 est un shunt électrique pour la mesure du courant électrique. Le signal de sortie SO est alors représentatif d'un courant électrique circulant dans ledit shunt. Le shunt comporte un point milieu 54 séparant une première partie 40A et une seconde partie 40B de chaque coté du point milieu. Le shunt comporte des plots de connexion de puissance pour faire circuler le courant de mesure et trois liaisons de mesure, Une liaison commune 72 est reliée au point 54 du shunt, une première liaison externe 73 est reliée du coté de la première partie 40A et une seconde liaison 74 externe est reliée du coté de la seconde partie 40B. Les moyens de commutation tels que les interrupteurs électroniques 16A et 16B et d'autres composants annexes tels les circuits de conditionnement 28 sont disposés sur un premier circuit imprimé 80 au potentiel électrique d'un circuit à mesurer. Ce circuit 80 reçoit les liaisons avec le shunt et des liaisons avec le primaire du transformateur de signal 14 et des liaisons avec des transformateurs à impulsion 27A et 27 B des moyens de commande 17. Un second circuit imprimé 81 supporte des circuits de l'unité de traitement 25 tels que les circuits de détection et de traitement 23 et les générateurs 24 de signaux de commande. Les circuits électroniques sur le circuit imprimé 81 sont à un potentiel différent et découplé électriquement et galvaniquement par rapport aux circuits électroniques disposés sur le circuit imprimé 80. Le circuit imprimé 81 a d'un coté des liaisons avec le transformateur de signal 14 et les transformateurs d'impulsions 27A et 27B et d'un autre coté des liaisons avec une entrée P d'alimentation 82, une sortie 83 de signal SO et une entrée 0V de masse commune 84.

Pour des mesures de plusieurs signaux de tension ou courant il est possible d'utiliser parallèlement plusieurs dispositifs tels que décrits ci-dessus. Cependant, dans des modes de réalisation particuliers de l'invention le transformateur de signal fait partie d'un ensemble de multiplexage.

La figure 10 représente un premier schéma d'un dispositif de couplage selon un mode de réalisation de l'invention avec un multiplexage de signaux d'entrée sur un transformateur de signal commun 14. Le transformateur de signal 14 comporte : au moins un premier enroulement primaire 151 pour recevoir un premier signal d'entrée SI1 et au moins des premiers moyens de commutation 161 pour découper ledit premier signal d'entrée SI1 et au moins un second enroulement primaire 152 pour recevoir un second signal d'entrée SI2 et au moins des seconds moyens 162 de commutation pour découper ledit second signal d'entrée SI2, et au moins un enroulement secondaire 21 pour fournir un signal secondaire SD de représentatif dudit premier signal d'entrée SI1 ou dudit second signal d'entrée SI2. Une unité de traitement 25 sélectionne des premiers moyens de commande 271 desdits premiers moyens de commutation 161 pour fournir un signal de sortie SO représentatif dudit premier signal d'entrée SI1, ou sélectionne des seconds moyens de commande 272 des seconds moyens de commutation 162 pour fournir un signal de sortie SO représentatif dudit second signal d'entrée SI2. Ainsi, sur le signal SD de l'enroulement secondaire 21 du transformateur de signal il peut y avoir soit un signal représentatif du premier signal d'entrée, soit un signal représentatif du second signal d'entrée, un signal représentatif d'une combinaison des signaux d'entrée en fonction de la commande des interrupteurs des moyens de commutation.

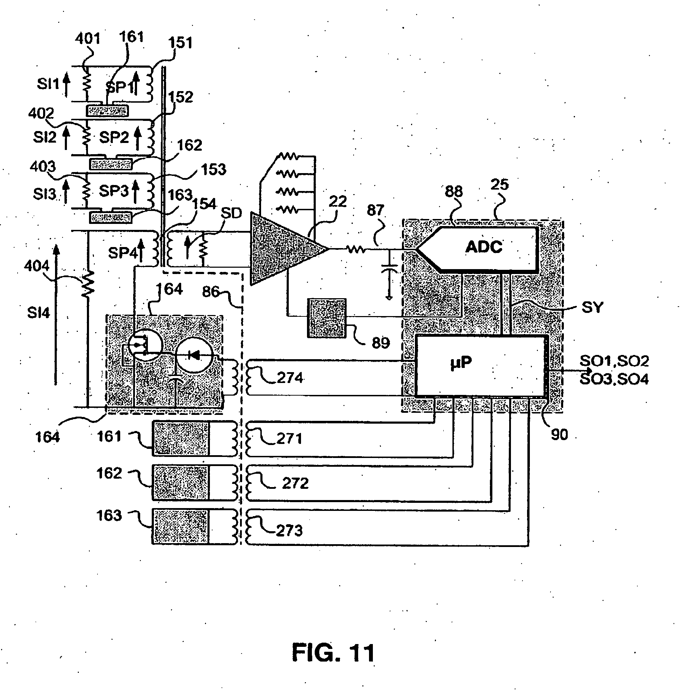

La figure 11 représente un second schéma d'un dispositif de couplage selon un mode de réalisation de l'invention avec un multiplexage de signaux d'entrée SI1, SI2, SI3, SI4 sur un transformateur de signal commun 14. Les quatre signaux SI1 à SI4 peuvent être générés sur des résistances de mesure 401, 402, 403, ou 404 puis découpés par des moyens de commutation respectivement 161, 162, 163, et 164 et commandés par des transformateurs d'impulsion des moyens de commande respectivement 271, 272, 273 et 274. Sur le schéma, les moyens de commutation 274 sont représentés complètement en une seule partie alors que les autres sont représentés par des blocks en deux parties pour alléger le schéma. Le découpage des signaux d'entrée permet de fournir des signaux primaires SP1, SP2, SP3, et SP4 à des enroulements primaires, 151, 152, 153, et 154 du transformateur de signal 14. L'isolement galvanique ou électrique est représenté par une ligne interrompue 86. Le signal secondaire SD est appliqué à un amplificateur 22 ayant une amplification paramétrable. Le signal de sortie de l'amplificateur est filtré par un filtre passe bas 87 avant d'être appliqué à l'unité de traitement 25. L'unité de traitement 25 comporte un échantillonneur 88 de signal pour échantillonner un signal représentatif d'un signal secondaire multiplexé et fournir des valeurs représentatives de chaque signal d'entrée, l'échantillonnage étant synchronisé avec la sélection des moyens de commande. L'amplificateur 22 et l'échantillonneur 88 sont référencés par un circuit de référence 89. Un microcontrôleur ou un microprocesseur situé dans l'unité de traitement permet la fourniture de signaux de commande des moyens de commutation et la synchronisation de l'échantillonnage servant de détection synchrone. Le microprocesseur 90 recevant les échantillons du signal SD sépare les différentes valeurs en plusieurs signaux de sortie SO1, SO2, SO3 et SO4 représentatifs de chaque respectivement des signaux d'entrée SI1, SI2, SI3, et SI4.

De préférence, les moyens de traitement commandent séquentiellement la sélection des moyens de commande pour fournir un signal de sortie SO multiplexé représentatif séquentiellement de chaque signal d'entrée SI1 à SI4. Avantageusement, les moyens de traitement peuvent commander simultanément des moyens de commande pour fournir un signal de sortie SO représentatif de la somme des signaux d'entrée.

Avec un schéma tel que celui de la figure 11, le dispositif de couplage peut être utilisé dans un disjoncteur de type tétrapolaire recevant des signaux représentatifs de signaux de trois phases et d'un conducteur de neutre. Les résistances de mesure 401, 402, 403, ou 404 sont alors des shunts de mesure de courants. En cas de protection terré, une commande simultanée des quatre voies peut fournir un signal SO représentatif d'un courant différentiel.

Dans un autre mode de réalisation, un traitement numérique simultané des quatre voies par un processeur peut fournir un signal SO représentatif d'un courant différentiel ou de la somme des signaux d'entrée.

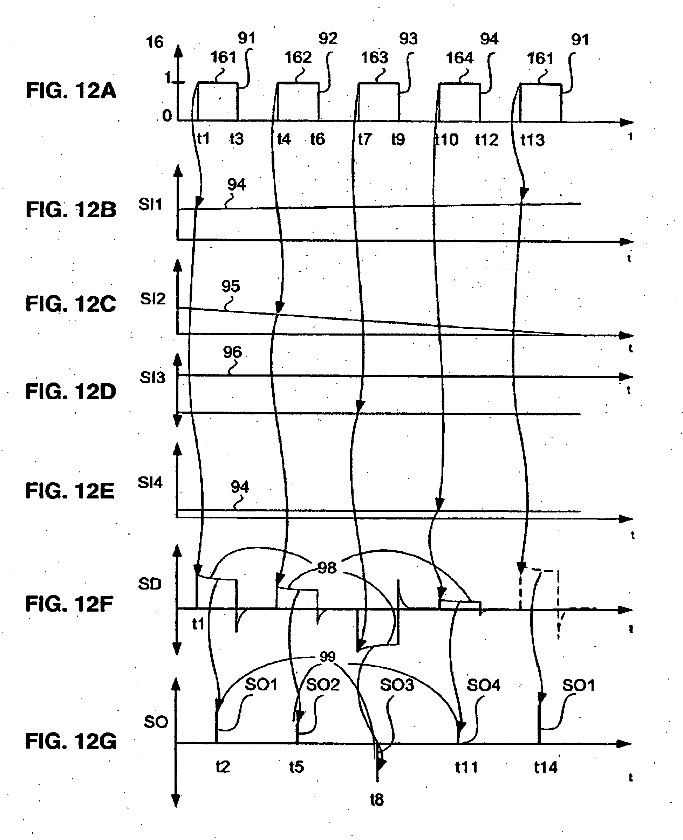

Les figures 12A à 12G représentent des courbes de signaux dans un dispositif de la figure 11. Des états des différents moyens de commutation 161 à 164 sont représentés sur des courbes 91 à 94 de la figure 12A. L'état 1 correspond à un état fermé de l'interrupteur correspondant et l'état 0 correspond à l'état ouvert. La figure 12B montre une courbe 95 représentative d'un exemple de signal d'entrée SI1. La figure 12C montre une courbe 96 représentative d'un exemple de signal d'entrée SI2. La figure 12D montre une courbe 97 représentative d'un exemple de signal d'entrée SI3. La figure 12E montre une courbe 98 représentative d'un exemple de signal d'entrée SI4. La figure 12F montre une courbe 99 représentative d'un exemple de signal secondaire SD. La figure 12G montre un échantillonnage du signal secondaire pour séparer le signal SD en quatre signaux de sortie SO1, SO2, SO3 et SO4 représentatifs des quatre signaux d'entrée SI1, SI2, SI3, et SI4.

A un instant t1, l'interrupteur 161 est fermé et le signal secondaire SD devient représentatif du signal d'entée SI1. Après un délai D permettant au transformateur 14 d'avoir un fonctionnement stable, à un instant t2, le signal SD est échantillonné pour avoir un signal de sortie SO1 représentatif du signal SI1. A la fin de la commande de l'interrupteur 161, à un instant t3, il n'y à plus de signal au primaire du transformateur, et le signal secondaire passe à une valeur nulle. A un instant t4, l'interrupteur 162 est fermé et le signal secondaire SD devient représentatif du signal d'entée SI2. Après un délai D permettant au transformateur 14 d'avoir un fonctionnement stable, à un instant t5, le signal SD est échantillonné pour avoir un signal de sortie SO2 représentatif du signal SI2. A un instant t6, la commande de l'interrupteur 162 est terminée. Puis, à un instant t7, l'interrupteur 163 est fermé et le signal secondaire SD devient représentatif du signal d'entée SI3. Après un délai D permettant au transformateur 14 d'avoir un fonctionnement stable, à un instant t8, le signal SD est échantillonné pour avoir un signal de sortie SO3 représentatif du signal SI3. A un instant t9, la commande de l'interrupteur 163 est terminée. Enfin, à un instant t10, l'interrupteur 164 est fermé et le signal secondaire SD devient représentatif du signal d'entée SI4. Après un délai D permettant au transformateur 14 d'avoir un fonctionnement stable, à un instant t11, le signal SD est échantillonné pour avoir un signal de sortie SO4 représentatif du signal SI4. A un instant t12, la commande de l'interrupteur 164 est terminée. A un instant t13, le cycle recommence en fermant l'interrupteur 161, et en échantillonnant SD à l'instant t14 pour fournir SO1. Le délai D correspond au temps d'attente entre le début de fermeture des interrupteurs et l'échantillonnage du signal secondaire SD en sortie du transformateur de signal 14.

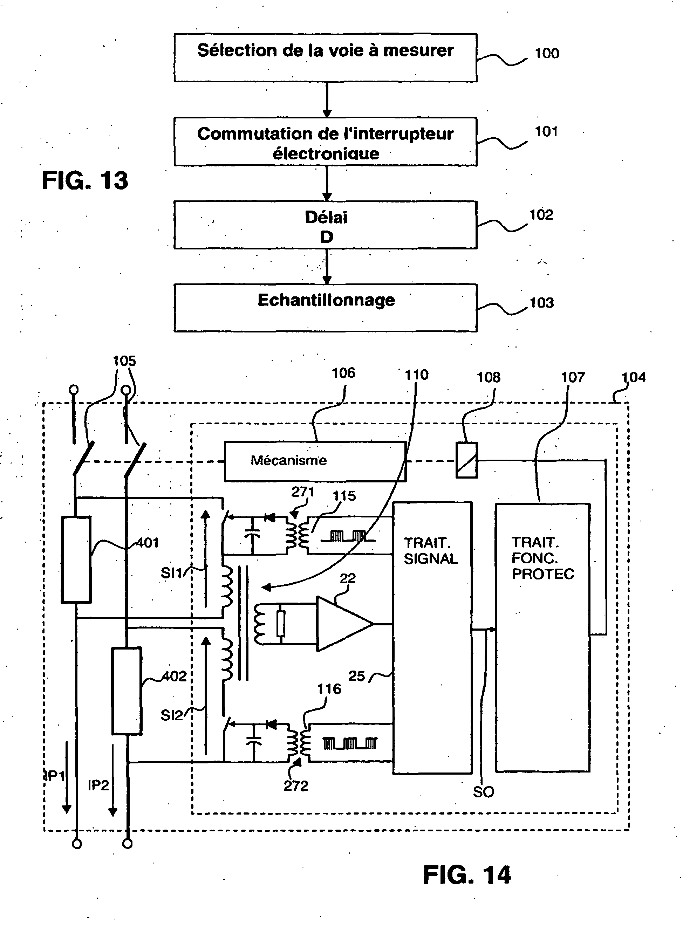

La figure 13 représente un organigramme montrant un cycle d'acquisition d'un échantillon de mesure. A une étape 100, l'unité de traitement sélectionne la voie à mesurer. Puis, à une étape 101, un interrupteur électronique des moyens de commutation est fermé. Ensuite, après un délai D permettant la stabilisation du fonctionnement du transformateur en évitant notamment des oscillations parasites à une étape 102, l'unité de traitement commande l'échantillonnage d'un signal représentatif du signal secondaire SD à une étape 103. Ainsi, l'échantillonnage est effectué après un délai D prédéterminé suivant le début d'une impulsion de commande fermant des moyens de commutation.

La figure 14 représente un schéma appareil électrique comportant un dispositif de mesure selon un mode réalisation l'invention. Un tel appareil électrique 104 comporte au moins une résistance de mesure 401 et 402, des contacts électriques de puissance 105 connectés en série avec ladite au moins une résistance de mesure, un mécanisme 106 de commande d'ouverture des contacts électriques 105, et des moyens de traitement 107 de fonctions de protection commandant un relais 108 relié audit mécanisme 106. Selon un mode de réalisation de l'invention l'appareil comporte un dispositif de couplage 110 tel que décrit ci-dessus ayant au moins une entrée de signal connectée à ladite au moins une résistance de mesure, et une sortie de signal connectée aux moyens de traitement 107 de fonction de protection pour fournir un signal de sortie SO représentatif d'un courant circulant dans ladite résistance de mesure. Sur la figure 14, il y a deux résistances de mesure 401 et 402 dans lesquelles peuvent circuler deux courants primaires IP1 et IP2 et générer des signaux de mesure d'entrée SI1 et SI2. Dans ce cas, le dispositif de couplage 110 peut être le même que celui de la figure 10 avec un multiplexage de signal. Les résistances 401 et 402 peuvent être des résistances de très faibles valeurs telles que des shunts électriques.

Dans les modes de réalisation décrits ci-dessus, les moyens de commande des moyens de commutation sont de préférence des transformateurs 27, 271, 272 à impulsions ayant un enroulement primaire 115 recevant les signaux de commande et un enroulement secondaire 116 pour commander des moyens de commutation.

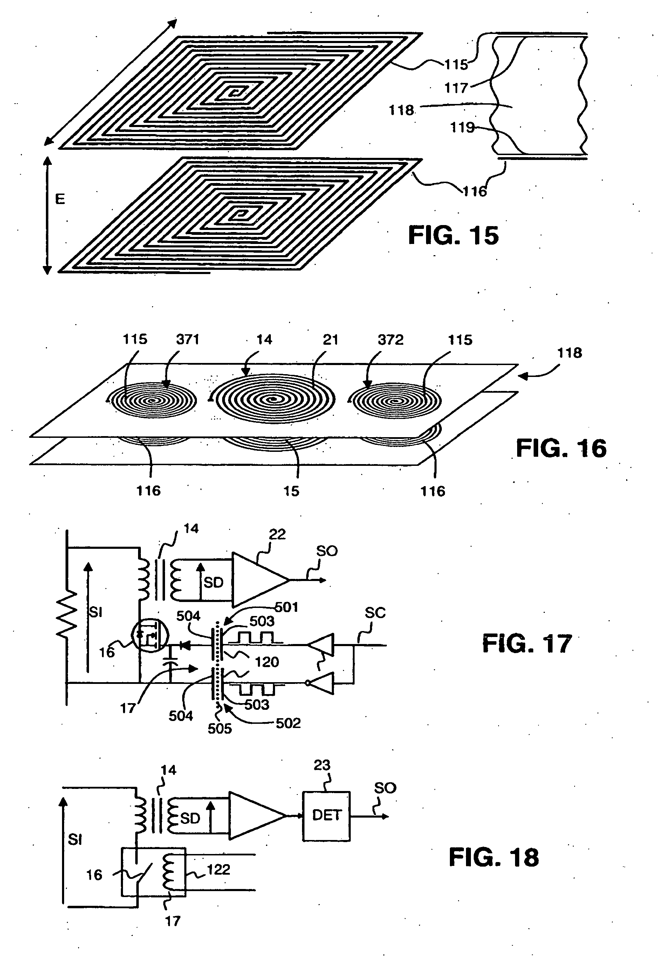

Lorsque les moyens de commande des moyens de commutation sont des transformateurs à impulsion, la fréquence de fonctionnement propre peut être très élevée pour réduire la taille ou supprimer le circuit magnétique. La commande peut prendre la forme de salves de signaux à fréquence très élevée durant une période de commande. La figure 15 représente un transformateur d'impulsion sous forme imprimée utilisé dans les moyens de commande d'un dispositif de couplage selon un mode réalisation de l'invention. Dans ce cas, le transformateur à impulsions est un transformateur à air ayant un enroulement primaire 115 sur une première face 117 d'un circuit imprimé 118 et un enroulement secondaire 116 sur une seconde face 119 dudit circuit imprimé. La fréquence de fonctionnement est alors très élevée pour atteindre des tailles d'enroulement très faible. Sur le mode de réalisation de la figure 15 chaque enroulement a treize spires avec une dimension extérieure inférieure à un centimètre de coté. Bien évidemment dans ces cas la fréquence de fonctionnement des moyens de commande est très supérieure à la fréquence découpage. Les signaux de commande sont alors des créneaux ou des salves d'impulsions à haute fréquence fournies pendant des périodes TC de découpage. Le circuit imprimé peut aussi être un circuit gravé ou tout autre circuit servant de support par exemple un support céramique ou alumine. Même dans la forme imprimée, les transformateurs de commande peuvent avoir un circuit magnétique adapté aux formes et aux dimensions du support de circuit. Afin de réduire les tailles dudit un transformateur de commande à air, un support de circuit 118 est avantageusement composé d'un matériau polyimide. De préférence, le support de circuit a une épaisseur (E) comprise entre 3 et 80 µm.

Dans un cas particulier de réalisation, le transformateur de mesure peut être un transformateur à air ayant au moins un enroulement primaire 15 sur une première face d'un support de circuit 118 et un enroulement secondaire 21 sur une seconde face dudit support de circuit. Avantageusement, le support de circuit est composé d'un matériau polyimide d'une épaisseur (E) comprise entre 3 et 80 µm.

La figure 16 montre un assemblage de deux transformateurs de commande et un transformateur de mesure placés sur un même support isolant avec des enroulements de chaque coté dudit support de circuit. Dans ce cas aussi, le support de circuit est avantageusement composé d'un matériau polyimide ayant une épaisseur (E) comprise entre 3 et 80 µm.

Les figures 17 et 18 montrent des variantes de dispositifs selon des modes de réalisation de l'invention.

Sur la figure 17, les moyens de commande des moyens de commutation sont une double liaison capacitive 120 laissant passer les impulsions et bloquant le courant continu ou de basse fréquence pour assurer l'isolement galvanique. Sur chaque branche de la liaison capacitive les signaux de commande sont complémentaires pour faire circuler un courant de commande entre les deux liaisons et garantir un isolement électrique de mode commun. Ainsi, lesdits moyens de commande des moyens de commutation comportent au moins deux condensateurs 501, 502 de couplage capacitif ayant chacun une première électrode 503 pour recevoir les signaux de commande et une seconde électrode 504 pour commander des moyens de commutation. De préférence, les condensateurs sont réalisé sur un support de circuit 505 composé d'un matériau polyimide ayant une épaisseur comprise entre 3 et 80 µm. Dans ce cas, ledit support de circuit a sur une première face les premières électrodes 503 et sur la seconde face les secondes électrodes 504 desdits deux condensateurs de couplage 501 et 502.

Sur la figure 18, les moyens de commande des moyens de commutation et les moyens de commutation sont groupés en un micro composant électromagnétique 122 de préférence en technologie dite MEMs.

Plusieurs types de moyens de commutation peuvent être utilisés notamment des transistors à effet de champ, de transistors bipolaires, des commutateurs à commande électromagnétique, électrostatique ou optique.

La fréquence de découpage du signal d'entrée SI peut dépendre de la taille du transformateur de couplage utilisé et du taux de transfert à travers ledit transformateur. Cette fréquence de découpage est avantageusement liée aux capacités des moyens de détection et d'échantillonnage.

Les dispositifs de couplage décrits ci-dessus permettent dé mesurer tout type de signaux électriques, notamment des courants, des tensions, ou plusieurs types en mode multiplexé sur un même circuit magnétique du transformateur de-signal. Pour la mesure de tension, le signal d'entrée peut être fourni par un pont diviseur de tension.

Les appareils électriques comprenant le dispositif de couplage peuvent être de tout type. Si l'appareil électrique comporte des fonctions de protection électrique comme celles d'un relais ou d'un déclencheur de disjoncteur, les résistances de mesures sont avantageusement des shunts électriques. Ces shunts peuvent être de type résistance ou impédance par exemple à inductance.

## Revendications

1. Dispositif de couplage à isolement électrique comportant :
- au moins une entrée de signal d'entrée (SI),
- une sortie de signal de sortie (SO) représentatif dudit signal d'entrée, et
- des moyens de transfert de signal à isolement électrique recevant le signal d'entrée et fournissant ledit signal de sortie,
- au moins un transformateur (14) de signal ayant au moins un enroulement (15, 15A, 15B, 151, 152, 153, 154) primaire pour recevoir un signal primaire (SP, SP1, SP2, SP3, SP4) représentatif dudit signal d'entrée (SI, SIA, SIB, SI1, SI2, SI3, SI4),
- des moyens (16, 16A, 16B, 161, 162, 163, 164, 31, 32) de commutation pour découper le signal d'entrée et fournir ledit signal primaire représentatif dudit signal d'entrée audit enroulement primaire,
- des moyens (17, 17A, 17B, 27, 27A, 27B, 271, 272, 273, 274) de commande des moyens de commutation comportant une entrée de signal (SC) de commande recevant des signaux de commande pendant des périodes (TC) de commutation, et une sortie électriquement isolée de l'entrée de signaux de commande et connectée audits moyens (16, 16A, 16B, 161, 162, 163, 164, 31, 32) de commutation pour commander le découpage de signal primaire pendant lesdites des périodes (TC) de commutation,
**caractérisé en ce que** lesdits moyens de commande des moyens de commutation comportent des moyens de couplage par induction électromagnétique et/ou par liaison capacitive.

2. Dispositif de couplage selon la revendication 1 **caractérisé en ce que** le transformateur (14) de signal comporte deux enroulements (15A, 15B) primaires connectés avec des sens d'enroulement inversés, une première extrémité de chaque enroulement est reliée en un point commun des enroulements pour recevoir l'entrée de signal, des secondes extrémités des enroulements sont connectés à des premiers moyens (16A) de commutation et à des seconds moyens (16B) de commutation pour découper et orienter le signal (SI, SIA, SIB) d'entrée alternativement sur le premier et le second enroulement.

3. Dispositif de couplage selon la revendication 1 **caractérisé en ce que** le transformateur (14) de signal comporte un enroulement primaire (15) connecté à des moyens de commutation (16) comportant quatre commutateurs (16A1, 16A2, 16B1, 16B2) électroniques connectés en pont à deux branches (50, 51), des lignes extérieures du pont recevant le signal (SI) d'entrée et des branches (53) intérieures du pont étant connectées audit enroulement (15) primaire dudit transformateur de signal, lesdits commutateurs en pont étant commandés alternativement de manière croisée pour inverser le sens du signal (SP) primaire appliqué à l'enroulement (15) primaire dudit transformateur de signal.

4. Dispositif de couplage selon la revendication 1 **caractérisé en ce que** le signal d'entrée (SI, SIA, SIB) est appliqué à un pont de deux résistances (40A, 40B) de mesure connectées en série, un point (54) commun des résistances de mesure étant connecté à une première extrémité d'un enroulement (15) primaire du transformateur (14) de signal, une seconde extrémité dudit enrouement (15) primaire du transformateur de signal étant connecté à une partie centrale commune (55) d'un pont de commutation à deux commutateurs (16A, 16B) des moyens de commutation, des lignes externes (57, 58) des commutateurs dudit pont étant connectées sur les parties externes (59, 60) opposées au point commun du pont de résistances, les deux commutateurs fonctionnant de manière alternée pour inverser le sens du signal (SP) primaire appliqué à l'enroulement (15) primaire dudit transformateur (14) de signal.

5. Dispositif de couplage selon l'une quelconque des revendications 1 à 4 **caractérisé en ce que** le transformateur (14) de signal comporte :
- au moins un premier enroulement (151) primaire pour recevoir un premier signal (SI1) d'entrée et au moins des premiers moyens (161) de commutation pour découper ledit premier signal d'entrée
- au moins un second enroulement (152) primaire pour recevoir un second signal (SI2) d'entrée et au moins des seconds moyens (162) de commutation pour découper ledit second signal d'entrée, et
- au moins un enroulement (21) secondaire pour fournir un signal (SD) représentatif dudit premier signal (SI1) d'entrée ou dudit second signal (SI2) d'entrée.

6. Dispositif de couplage selon la revendication 5 **caractérisé en ce qu'**il comporte des moyens (25) de traitement :
- pour sélectionner des premiers moyens (271) de commande desdits premiers moyens (161) de commutation pour fournir un signal (SO) de sortie représentatif dudit premier signal (SI1) d'entrée, ou
- pour sélectionner des seconds moyens (272) de commande desdits seconds moyens (162) de commutation pour fournir un signal (SO) de sortie représentatif dudit second signal (SI2) d'entrée.

7. Dispositif de couplage selon l'une des revendications 5 ou 6 **caractérisé en ce que** les moyens de traitement (25) commandent séquentiellement la sélection des moyens de commande pour fournir un signal (SO) de sortie multiplexé représentatif séquentiellement de chaque signal (SI1, SI2, SI3, SI4) d'entrée et/ou commandent simultanément des moyens de commande pour fournir un signal (SO) de sortie représentatif de la somme des signaux d'entrée.

8. Dispositif de couplage selon l'une quelconque des revendications 5 à 7 **caractérisé en ce que** les moyens de traitement (25) activent la commande des moyens de commande pendant des périodes de durée courte et arrêtent la commande des moyens de commande pendant des périodes de durée longue.

9. Dispositif de couplage de courant selon l'une quelconque des revendications 1 à 8 **caractérisé en ce que** lesdits moyens de commande des moyens de commutation comportent au moins un transformateur (27, 271, 272, 273, 274, 27A, 27B) de commande ayant un enroulement primaire recevant les signaux de commande et un enroulement secondaire pour commander des moyens de commutation ledit transformateur étant un transformateur à air ayant un enroulement primaire (115) sur une première face (117) d'un support de circuit (118) et un enroulement secondaire (116) sur une seconde face (119) dudit support de circuit.

10. Dispositif de mesure de courant selon la revendication 9 caractérisé en ce le support de circuit est composé d'un matériau polyimide ayant une épaisseur (E) comprise entre 3 et 80 µm.

11. Dispositif de couplage de courant selon l'une quelconque des revendications 1 à 10 **caractérisé en ce que** le transformateur de mesure est un transformateur à air ayant au moins un enroulement primaire (15) sur une première face (117) d'un support de circuit (118) et un enroulement secondaire (21) sur une seconde face (119) dudit support de circuit, ledit support de circuit étant composé d'un matériau polyimide ayant une épaisseur (E) comprise entre 3 et 80 µm.

12. Dispositif de couplage de courant selon l'une quelconque des revendications 9 à 11 **caractérisé en ce que** ledit au moins un transformateur de commande (371, 372) et au moins un transformateur de mesure (14) sont placés sur un même support isolant (118) avec des enroulements (116, 116, 15, 21) de chaque coté dudit support de circuit, ledit support de circuit tant composé d'un matériau polyimide ayant une épaisseur (E) comprise entre 3 et 80 µm.

13. Dispositif de couplage de courant selon l'une quelconque des revendications 1 à 12 **caractérisé en ce que** lesdits moyens de commande des moyens de commutation comportent au moins deux condensateurs (501, 502) de couplage capacitif ayant chacun une première électrode (503) pour recevoir les signaux de commande et une seconde électrode (504) pour commander des moyens de commutation.

14. Dispositif de couplage de courant selon l'une quelconque des revendications 1 à 13 **caractérisé en ce qu'**il comporte aussi des moyens de commande des moyens de commutation (17) et les moyens (16) de commutation groupés en un micro composant électromagnétique (122) de type Mem's.

15. Appareil électrique comportant :
- au moins une résistance (40, 40A, 40B, 401, 402) de mesure,
- des contacts (105) électriques de puissance connectés en série avec ladite au moins une résistance de mesure,
- un mécanisme (106) de commande d'ouverture desdits contacts électriques, et
- des moyens (107) de traitement de fonctions de protection commandant un relais (108) relié audit mécanisme,
**caractérisé en ce qu'**il comporte au moins un dispositif de couplage selon l'une quelconque des revendications 1 à 14 ayant :
- au moins une entrée de signal (SI1, SI2) connectée à ladite au moins une résistance de mesure (40, 40A, 40B, 401, 402), et
- une sortie de signal (SO) connectée aux moyens (25) de traitement de fonction de protection pour fournir un signal (SO) représentatif d'un courant circulant dans ladite au moins une résistance de mesure.

## Patentansprüche

1. Kopplungsvorrichtung mit elektrischer Isolation, die Folgendes umfasst:
- mindestens einen Eingangssignaleingang (SI)
- einen Ausgangssignalausgang (SO), der für das Eingangssignal repräsentativ ist, und
- Signaltransfermittel mit elektrischer Isolation, die das Eingangssignal empfangen und das Ausgangssignal liefern,
- mindestens einen Signaltransformator (14), der mindestens eine Primärwicklung (15, 15A, 15B, 151, 152, 153, 154) hat, um ein Primärsignal (SP, SP1, SP2, SP3, SP4) zu empfangen, das für das Eingangssignal (SI, SIA, SIB, SI1, SI2, SI3, SI4) repräsentativ ist,
- Umschaltmittel (16, 16A, 16B, 161, 162, 163, 164, 31, 32), um das Eingangssignal zu teilen und das Primärsignal, das für das Eingangssignal repräsentativ ist, zu der Primärwicklung zu liefern,
- Steuermittel (17, 17A, 17B, 27, 27A, 27B, 271, 272, 273, 274) der Umschaltmittel, die einen Steuersignaleingang (SC) umfassen, der Steuersignale während der Umschaltzeitspannen (TC) empfängt, und einen elektrisch von dem Steuersignaleingang isolierten Ausgang, der mit den Umschaltmitteln (16, 16A, 16B, 161, 162, 163, 164, 31, 32) verbunden ist, um das Primärsignalteilen während der Umschaltzeitspannen (TC) zu steuern,
**dadurch gekennzeichnet, dass** die Steuermittel der Umschaltmittel Kopplungsmittel durch elektromagnetische Induktion und/oder durch kapazitive Verbindung umfassen.

2. Kopplungsvorrichtung nach Anspruch 1, **dadurch gekennzeichnet, dass** der Signaltransformator (14) zwei Primärwicklungen (15A, 15B) umfasst, die mit umgekehrten Wicklungsrichtungen angeschlossen sind, wobei ein erstes Ende jeder Wicklung an einer gemeinsamen Stelle der Wicklungen verbunden ist, um das Eingangssignal zu empfangen, wobei zweite Enden der Wicklungen mit ersten Umschaltmitteln (16A) und mit zweiten Umschaltmitteln (16B) verbunden sind, um das Eingangssignal (SI, SIA, SIB) zu teilen und abwechselnd auf die erste und die zweite Wicklung auszurichten.

3. Kopplungsvorrichtung nach Anspruch 1, **dadurch gekennzeichnet, dass** der Signaltransformator (14) eine Primärwicklung (15) umfasst, die mit Umschaltmitteln (16) verbunden ist, die vier elektronische Umschalter (16A1, 16A2, 16B1, 16B2) umfassen, die als Brücke mit zwei Schenkeln (50, 51) verbunden sind, wobei externe Leitungen der Brücke das Eingangssignal (SI) empfangen und innere Schenkel (53) der Brücke mit der Primärwicklung (15) des Signaltransformators verbunden sind, wobei die Umschalter in Brücke abwechselnd gekreuzt gesteuert werden, um die Richtung des Primärsignals (SP), das an die Primärwicklung (15) des Signaltransformators angelegt wird, umzukehren.

4. Kopplungsvorrichtung nach Anspruch 1, **dadurch gekennzeichnet, dass** das Eingangssignal (SI, SIA, SIB) an eine Brücke aus zwei Messwiderständen (40A, 40B), die in Serie geschaltet sind, angelegt ist, wobei eine gemeinsame Stelle (54) der Messwiderstände mit einem ersten Ende einer Primärwicklung (15) des Signaltransformators (14) verbunden ist, wobei ein zweites Ende der Primärwicklung (15) des Signaltransformators mit einem gemeinsamen zentralen Teil (55) einer Umschaltbrücke mit zwei Umschaltern (16A, 16B) der Umschaltmittel verbunden ist, wobei externe Leitungen (57, 58) der Umschalter der Brücke mit den externen Teilen (59, 60), die der gemeinsamen Stelle der Widerständebrücke entgegengesetzt sind, verbunden sind, wobei die zwei Umschalter abwechselnd funktionieren, um die Richtung des Primärsignals (SP), das an die Primärwicklung (15) des Signaltransformators (14) angelegt ist, umzukehren.

5. Kopplungsvorrichtung nach einem der Ansprüche 1 bis 4, **dadurch gekennzeichnet, dass** der Signaltransformator (14) Folgendes umfasst:
- mindestens eine erste Primärwicklung (151), um ein erstes Eingangssignal (S11) zu empfangen, und mindestens erste Umschaltmittel (161), um das erste Eingangssignal zu teilen,
- mindestens eine zweite Primärwicklung (152), um ein zweites Eingangssignal (SI2) zu empfangen, und mindestens zweite Umschaltmittel (162), um das zweite Eingangssignal zu teilen, und
- mindestens eine Sekundärwicklung (21), um ein Signal (SD), das für das erste Eingangssignal (SI1) oder das zweite Eingangssignal (SI2) repräsentativ ist, zu liefern.

6. Kopplungsvorrichtung nach Anspruch 5, **dadurch gekennzeichnet, dass** sie Verarbeitungsmittel (25) umfasst:
- um erste Steuermittel (271) der ersten Umschaltmittel (161) auszuwählen, um ein Ausgangssignal (SO), das für das erste Eingangssignal (SI1) repräsentativ ist, zu liefern, oder
- um zweite Steuermittel (272) der zweiten Umschaltmittel (162) auszuwählen, um ein Ausgangssignal (SO), das für das zweite Eingangssignal (SI2) repräsentativ ist, zu liefern.

7. Kopplungsvorrichtung nach einem der Ansprüche 5 oder 6, **dadurch gekennzeichnet, dass** die Verarbeitungsmittel (25) die Auswahl der Steuermittel sequenziell steuern, um ein gemultiplextes Ausgangssignal (SO) zu liefern, das sequenziell für jedes Eingangssignal (SI1, SI2, SI3, SI4) repräsentativ ist, und/oder gleichzeitig Steuermittel steuern, um ein Ausgangssignal (SO) zu liefern, das für die Summe der Eingangssignale repräsentativ ist.

8. Kopplungsvorrichtung nach einem der Ansprüche 5 bis 7, **dadurch gekennzeichnet, dass** die Verarbeitungsmittel (25) das Steuern der Steuermittel während Perioden mit kurzer Dauer aktivieren und das Steuern der Steuermittel während Perioden mit langer Dauer stoppen.

9. Kopplungsvorrichtung nach einem der Ansprüche 1 bis 8, **dadurch gekennzeichnet, dass** die Steuermittel der Umschaltmittel mindestens einen Steuertransformator (27, 271, 272, 273, 274, 27A, 27B) umfassen, der eine Primärwicklung hat, die die Steuersignale empfängt, und eine Sekundärwicklung, um Umschaltmittel zu steuern, wobei der Transformator ein Luftkerntransformator ist, der eine Primärwicklung (115) auf einer ersten Seite (117) eines Schaltungsträgers (118) und eine Sekundärwicklung (116) auf einer zweiten Seite (119) des Schaltungsträgers hat.

10. Kopplungsvorrichtung nach Anspruch 9, **dadurch gekennzeichnet, dass** der Schaltungsträger aus einem Polyimid-Werkstoff besteht, der eine Stärke (E) zwischen 3 und 80 µm hat.

11. Kopplungsvorrichtung nach einem der Ansprüche 1 bis 10, **dadurch gekennzeichnet, dass** der Messtransformator ein Luftkerntransformator ist, der mindestens eine Primärwicklung (15) auf einer ersten Seite (117) eines Schaltungsträgers (118) und eine Sekundärwicklung (21) auf einer zweiten Seite (119) des Schaltungsträgers hat, wobei der Schaltungsträger aus einem Polyimid-Werkstoff besteht, der eine Stärke (E) zwischen 3 und 80 µm hat.

12. Kopplungsvorrichtung nach einem der Ansprüche 9 bis 11, **dadurch gekennzeichnet, dass** der mindestens eine Steuertransformator (371, 372) und mindestens eine Messtransformator (14) auf ein und demselben isolierenden Träger (118) mit Wicklungen (116, 116, 15, 21) auf jeder Seite des Schaltungsträgers platziert sind, wobei der Schaltungsträger aus einem Polyimid-Werkstoff mit einer Stärke (E) zwischen 3 und 80 µm besteht.

13. Kopplungsvorrichtung nach einem der Ansprüche 1 bis 12, **dadurch gekennzeichnet, dass** die Steuermittel der Umschaltmittel mindestens zwei kapazitive Kopplungskondensatoren (501, 502) umfassen, die jeweils eine erste Elektrode (503) zum Empfangen der Steuersignale und eine zweite Elektrode (504) zum Steuern der Umschaltmittel haben.

14. Kopplungsvorrichtung nach einem der Ansprüche 1 bis 13, **dadurch gekennzeichnet, dass** sie auch Steuermittel der Umschaltmittel (17) und die Umschaltmittel (16) umfasst, die in einem elektromagnetischen Mikrobauteil (122) des Typs MEMS gruppiert sind.

15. Elektrogerät, das Folgendes umfasst:
- mindestens einen Messwiderstand (40, 40A, 40B, 401, 402),
- elektrische Leistungskontakte (105), die mit dem mindestens einen Messwiderstand in Serie geschaltet sind,
- einen Steuermechanismus (106) zum Öffnen der elektrischen Kontakte, und
- Verarbeitungsmittel (107) mit Schutzfunktionen, die ein Relais (108), das mit dem Mechanismus verbunden ist, steuern,
**dadurch gekennzeichnet, dass** es mindestens eine Kopplungsvorrichtung nach einem der Ansprüche 1 bis 14 umfasst, die Folgendes hat:
- mindestens einen Signaleingang (SI1, SI2), der mit dem mindestens einen Messwiderstand (40, 40A, 40B, 401, 402) verbunden ist, und
- einen Signalausgang (SO), der mit Schutzfunktions-Verarbeitungsmitteln (25) verbunden ist, um ein Signal (SO), das für einen Strom, der in dem mindestens einen Messwiderstand zirkuliert, repräsentativ ist, zu liefern.

## Claims

1. Coupling device with electrical insulation comprising:
- at least one input signal (SI) input,
- an output signal (SO) output, the output signal being representative of the said input signal, and
- signal transfer means with electrical insulation receiving the input signal and providing the said output signal,
- at least one signal transformer (14) having at least one primary winding (15, 15A, 15B, 151, 152, 153, 154) to receive a primary signal (SP, SP1, SP2, SP3, SP4) representative of the said input signal (SI, SIA, SIB, SI1, SI2, SI3, SI4),
- switching means (16, 16A, 16B, 161, 162, 163, 164, 31, 32) to cut the input signal and provide the said primary signal representative of the said input signal to the said primary winding,
- means (17, 17A, 17B, 27, 27A, 27B, 271, 272, 273, 274) of control of the switching means comprising a control signal input (SC) receiving control signals during switching periods (TC), and an output electrically insulated from the control signals input and connected to the said switching means (16, 16A, 16B, 161, 162, 163, 164, 31, 32) to control the primary signal cutting during the said switching periods (TC), **characterized in that** the said means of control of the switching means comprise means of coupling by electromagnetic induction and/or by capacitive link.

2. Coupling device according to Claim 1, **characterized in that** the signal transformer (14) comprises two primary windings (15A, 15B) connected with reversed directions of winding, a first end of each winding is linked at a common point of the windings to receive the signal input, second ends of the windings are connected to first switching means (16A) and to second switching means (16B) to cut and orient the input signal (SI, SIA, SIB) alternately on the first and the second winding.

3. Coupling device according to Claim 1, **characterized in that** the signal transformer (14) comprises a primary winding (15) connected to switching means (16) comprising four electronic switches (16A1, 16A2, 16B1, 16B2) connected bridge-like with two branches (50, 51), exterior lines of the bridge receiving the input signal (SI) and interior branches (53) of the bridge being connected to the said primary winding (15) of the said signal transformer, the said bridge-like switches being controlled alternately in a crossed manner so as to reverse the direction of the primary signal (SP) applied to the primary winding (15) of the said signal transformer.

4. Coupling device according to Claim 1, **characterized in that** the input signal (SI, SIA, SIB) is applied to a bridge of two measurement resistors (40A, 40B) connected in series, a common point (54) of the measurement resistors being connected to a first end of a primary winding (15) of the signal transformer (14), a second end of the said primary winding (15) of the signal transformer being connected to a common central part (55) of a switching bridge with two switches (16A, 16B) of the switching means, external lines (57, 58) of the switches of the said bridge being connected to the external parts (59, 60) opposite from the common point of the bridge of resistors, the two switches operating in an alternate manner so as to reverse the direction of the primary signal (SP) applied to the primary winding (15) of the said signal transformer (14).

5. Coupling device according to any one of Claims 1 to 4, **characterized in that** the signal transformer (14) comprises:
- at least one first primary winding (151) to receive a first input signal (SI1) and at least first switching means (161) to cut the said first input signal
- at least one second primary winding (152) to receive a second input signal (SI2) and at least second switching means (162) to cut the said second input signal, and
- at least one secondary winding (21) to provide a signal (SD) representative of the said first input signal (SI1) or of the said second input signal (SI2).

6. Coupling device according to Claim 5, **characterized in that** it comprises processing means (25) so as:
- to select first means (271) of control of the said first switching means (161) so as to provide an output signal (SO) representative of the said first input signal (SI1), or
- to select second means (272) of control of the said second switching means (162) so as to provide an output signal (SO) representative of the said second input signal (SI2).

7. Coupling device according to one of Claims 5 and 6, **characterized in that** the processing means (25) sequentially control the selection of the means of control so as to provide a multiplexed output signal (SO) representative sequentially of each input signal (SI1, SI2, SI3, SI4) and/or they simultaneously control means of control so as to provide an output signal (SO) representative of the sum of the input signals.

8. Coupling device according to any one of Claims 5 to 7, **characterized in that** the processing means (25) activate the control of the means of control during periods of short duration and stop the control of the means of control during periods of long duration.

9. Coupling device according to any one of Claims 1 to 8, **characterized in that** the said means of control of the switching means comprise at least one control transformer (27, 271, 272, 273, 274, 27A, 27B) having a primary winding receiving the control signals and a secondary winding to control switching means, the said transformer being an air-type transformer having a primary winding (115) on a first face (117) of a circuit support (118) and a secondary winding (116) on a second face (119) of the said circuit support.

10. Coupling device according to Claim 9, **characterized in that** the circuit support is composed of a polyimide material having a thickness (E) of between 3 and 80 µm.

11. Coupling device according to any one of Claims 1 to 10, **characterized in that** the measurement transformer is an air-type transformer having at least one primary winding (15) on a first face (117) of a circuit support (118) and a secondary winding (21) on a second face (119) of the said circuit support, the said circuit support being composed of a polyimide material having a thickness (E) of between 3 and 80 µm.

12. Coupling device according to any one of Claims 9 to 11, **characterized in that** the said at least one control transformer (371, 372) and at least one measurement transformer (14) are placed on one and the same insulating support (118) with windings (116, 116, 15, 21) on each side of the said circuit support, the said circuit support being composed of a polyimide material having a thickness (E) of between 3 and 80 µm.

13. Coupling device according to any one of Claims 1 to 12, **characterized in that** the said means of control of the switching means comprise at least two capacitors (501, 502) for capacitive coupling each having a first electrode (503) to receive the control signals and a second electrode (504) to control switching means.

14. Coupling device according to any one of Claims 1 to 13, **characterized in that** it also comprises means of control of the switching means (17) and the switching means (16) grouped into an electromagnetic micro component (122) of Mem's type.

15. Electrical apparatus comprising:
- at least one measurement resistor (40, 40A, 40B, 401, 402),
- power electrical contacts (105) connected in series with the said at least one measurement resistor,
- a mechanism (106) for controlling opening of the said electrical contacts, and
- means (107) for processing protection functions controlling a relay (108) linked to the said mechanism,
**characterized in that** it comprises at least one coupling device according to any one of Claims 1 to 14 having:
- at least one signal input (SI1, SI2) connected to the said at least one measurement resistor (40, 40A, 40B, 401, 402), and
- a signal output (SO) connected to the protection function processing means (25) to provide a signal (SO) representative of a current flowing in the said at least one measurement resistor.
